Europäisches Patentamt

European Patent Office

Office européen des brevets

(11) Numéro de publication : **0 364 380 B1**

(12) **FASCICULE DE BREVET EUROPEEN**

(45) Date de publication du fascicule du brevet :
17.06.92 Bulletin 92/25

(51) Int. Cl.⁵ : **F16L 37/12, F16L 37/08**

(21) Numéro de dépôt : **89440109.0**

(22) Date de dépôt : **09.10.89**

(54) **Raccord, notamment pour circuit hydraulique haute pression.**

(30) Priorité : **14.10.88 FR 8813721**

(43) Date de publication de la demande :
**18.04.90 Bulletin 90/16**

(45) Mention de la délivrance du brevet :
**17.06.92 Bulletin 92/25**

(84) Etats contractants désignés :
**AT BE CH DE ES GB GR IT LI LU NL SE**

(56) Documents cités :
**FR-A- 2 291 438**
**US-A- 3 826 523**
**US-A- 4 036 515**
**US-A- 4 135 745**

(73) Titulaire : **SOCIETE DES FLEXIBLES ANOFLEX**
**Société Anonyme dite**
**29, Avenue Barthélemy-Thimonnier**
**F-69300 Caluire et Cuire (FR)**

(72) Inventeur : **Coya, Raymond**
**Impasse Jourdan**
**F-69008 Lyon (FR)**

(74) Mandataire : **Aubertin, François**
**Cabinet Lepage & Aubertin Innovations et**
**Prestations 4, rue de Haguenau**
**F-67000 Strasbourg (FR)**

EP 0 364 380 B1

Jouve, 18, rue Saint-Denis, 75001 PARIS

## Description

L'invention concerne un raccord pour conduite flexible ou tuyau rigide, notamment, de circuit hydraulique haute pression, comprenant, d'une part, une partie femelle dans laquelle est introduite l'extrémité libre d'un tube à raccorder, cette partie femelle étant formée par un puits se décomposant, partant du fond, en un alésage cylindrique de diamètre, au moins égal au diamètre externe du tube à raccorder, un logement, un rétreint définissant avec ce dernier un épaulement, et des moyens assurant l'étanchéité du raccord et, d'autre part, des moyens de blocage encliquetables constituant des redans escamotables s'interposant entre l'épaulement aménagé dans ledit puits et, la face arrière, d'un bourrelet périphérique équipant le tube à raccorder, pour empêcher celui-ci de s'échapper de ladite partie femelle.

La présente invention trouvera son application dans toute installation au travers de laquelle est véhiculé un fluide soumis ou non à des pressions élevées, et, plus particulièrement, dans l'industrie spécialisée dans le domaine de l'hydraulique.

Les raccords les plus fréquemment utilisés pour assurer la liaison de conduites dans lesquelles est véhiculé un fluide, notamment, sous haute pression, se composent, d'une part, d'une partie femelle comportant un alésage taraudé dans lequel est introduite l'extrémité libre du tube à raccorder. D'autre part, ledit raccord comporte une partie mâle se présentant sous forme d'une douille emmanchée sur ledit tube et comportant, sur son pourtour externe, un filetage destiné à coopérer avec le taraudage aménagé dans l'alésage de ladite partie femelle. Plus précisément, cette partie mâle est engagée sur le tube, à l'arrière d'un bourrelet périphérique, de sorte qu'après vissage et serrage dans la partie femelle, il vient à immobiliser le tube dans cette dernière par action sur la face arrière dudit bourrelet périphérique.

La conception de ces raccords pour conduites soumises à des pressions élevées n'est nullement adaptée aux modes d'assemblage actuels. En effet, dans le cadre de constructions en grande série, tels que l'industrie de l'automobile, il est fait appel, de plus en plus fréquemment, à des robots pour procéder à l'assemblage des diverses pièces composant ces dernières.

Il en est notamment ainsi du montage et de l'assemblage des pièces de tôlerie, du moteur, du tableau de bord et de certains câblages électriques avec leur connexion aux différents organes de commande ou autres.

Cependant, le montage robotisé impose le respect de certaines conditions. Notamment, la liaison des pièces à assembler doit être facile à réaliser sans nécessiter une dextérité spécifique. Il convient, en outre, de prendre en compte que les organes de préhension des machines automatiques, dénommées robots, ne sont aptes à exécuter que des gestes très simples et d'amplitude limitée.

Aussi, si de tels organes de préhension sont en mesure de se déplacer, sans grande difficulté, par translation pour aller d'un point à un autre, le déplacement angulaire qu'il est possible de leur imprimer reste, toutefois, réduit. De ce fait, il est fait appel, très fréquemment, à des moyens pneumatiques pour engendrer un mouvement de rotation constant correspondant, par exemple, à une action de vissage.

Un autre point qu'il y a lieu de prendre en considération consiste en ce que les différentes pièces sont généralement, maintenues par simple action de serrage provoquée par des pinces de morphologie adéquate.

Par ailleurs, la pièce à assembler doit être aisément accessible en raison de l'encombrement que présentent, généralement, ces organes de préhension desdits robots.

Au vu de ce qui est exposé ci-dessus, on comprend, aisément, que les raccords dont la partie mâle est introduite par vissage dans la partie femelle, font, à ce jour, l'objet d'assemblage manuel, aucune technique automatique n'ayant pu être envisagée.

Un autre inconvénient, lié à un assemblage par vissage, réside au niveau du serrage de la partie mâle dans la partie femelle. En effet, l'intensité selon laquelle est effectuée cette action de serrage est des plus aléatoire, car difficilement reproductible. Toutefois, de ce couple de serrage imprimé à la partie mâle dépendra la tenue du raccord dans le temps et à la pression.

Il existe, par ailleurs, d'autres types de raccords, dits rapides, et dont la caractéristique essentielle consiste en ce que la partie mâle montée sur le tube à raccorder, est rendue solidaire de la partie femelle suite à une simple pression axiale.

Plus précisément, la partie mâle se présente sous forme d'un embout tubulaire comportant, sur son pourtour externe, une gorge dans laquelle viennent s'insérer, après engagement dans la partie femelle, une série de billes disposées dans une rainure aménagée dans l'alésage de cette dernière. Ces billes sont, ensuite, immobilisées radialement par l'intermédiaire d'un manchon se déplaçant axialement sur ladite partie femelle.

En fait, ces raccords constituent, plus précisément, des éléments de connexion entre deux conduites provenant d'appareillages distincts. De ce fait, ils ne dispensent pas de l'utilisation de raccords tels que décrits plus haut pour assurer la liaison de ces conduites au niveau desdits appareillages. De plus, ces raccords sont particulièrement onéreux, en raison de leur conception difficile et complexe.

On connaît, également, par le document US-A-3.826.523, un autre type de raccord rapide pour tuyau de circuit hydraulique véhiculant un fluide sous pression. Plus précisément, ce raccord se compose d'une partie femelle en forme d'un puits dans lequel est engagée l'extrémité libre du tuyau à raccorder.

Celui-ci comporte au niveau de cette extrémité libre, un bourrelet périphérique permettant de l'immobiliser dans la partie femelle au moyen d'un élément mâle. Ce dernier se présente, plus particulièrement, sous forme d'une bague encliquetable enfilée sur le tuyau à raccorder, à l'arrière du bourrelet périphérique. Cette bague encliquetable vient à coopérer avec la face arrière de ce dernier et, simultanément, avec un épaulement pratiqué dans le logement du puits, constitué par la partie femelle, pour immobiliser en translation, dans cette dernière, ledit tuyau à raccorder.

Ainsi, selon le mode de réalisation décrit dans ce document antérieur, cette partie femelle ou le puits comporte, partant du fond de ce dernier, un alésage au diamètre ajusté au tuyau à raccorder, cet alésage débouchant dans un premier décrochement dans lequel est disposé le joint d'étanchéité. Celui-ci venant à coopérer avec la face avant du bourrelet périphérique correspondant au tuyau à raccorder. Ce bourrelet périphérique se situe dans un logement de diamètre légèrement accru de manière à en autoriser l'engagement et le retrait. A noter que dans ce logement et, précisément, à l'arrière dudit bourrelet périphérique est usinée une rainure permettant de définir l'épaulement contre lequel viennent à prendre appui les organes de blocage de la bague encliquetable constituant l'élément mâle.

Selon un premier mode de réalisation, ces organes de blocage se présentent sous forme de languettes de verrouillage découpées dans la paroi de ladite bague encliquetable de manière à constituer des redans coopérant, une fois le raccord assemblé, avec l'épaulement aménagé à cet effet dans le puits de la partie femelle.

Selon un second mode de réalisation, cette bague encliquetable se présente, en fait, sous forme de plusieurs languettes disposées coaxialement, au tube à raccorder et rendues solidaires, au niveau de leur extrémité supérieure ou inférieure, par l'intermédiaire d'une partie annulaire. Ces languettes comportent, en outre, sur leur face externe un redan venant à s'insérer dans la rainure aménagée à cet effet dans le logement du puits que constitue la partie femelle de manière à s'opposer au retrait du tube à raccorder de cette dernière.

En tout état de cause, il convient de considérer que le raccord décrit dans ce document antérieur ne permet sa mise en oeuvre que dans le cadre de circuits hydrauliques en basse pression, d'une part, en raison de la résistance tout à fait relative des moyens de blocage que constitue l'organe mâle et, d'autre part, du manque d'éléments de sécurité appropriés.

En effet, les languettes de verrouillage qu'équipe la bague encliquetable, constituant l'élément mâle de ce raccord rapide, sont susceptibles de fléchir sous l'effet de la pression d'où peut découler la destruction de la liaison produite par ce raccord.

Par ailleurs, étant dépourvu de moyens de verrouillage qui soient en mesure, non seulement, d'éviter le dégagement inopiné de la partie mâle depuis la partie femelle, mais, en outre de s'assurer du bon montage de ces dernières, ce raccord rapide connu ne peut pas s'adapter à une éventuelle automatisation de son assemblage et de sa connexion.

La présente invention a pour but de remédier à l'ensemble des inconvénients précités en proposant un raccord pour conduites soumises à des hautes pressions qui soient de nature encliquetable, particulièrement sûre, et d'un coût de revient réduit.

L'invention, telle qu'elle est caractérisée dans les revendications résout le problème consistant à créer un raccord pour conduite flexible ou tuyau rigide, notamment, de circuit hydraulique haute pression, comprenant, d'une part, une partie femelle dans laquelle est introduite l'extrémité libre d'un tube à raccorder, cette partie femelle étant formée par un puits se décomposant partant du fond, en un alésage cylindrique de diamètre au moins égal au diamètre externe du tube à raccorder, un logement, un rétreint définissant avec ce dernier un épaulement, et des moyens assurant l'étanchéité du raccord et, d'autre part, des moyens de blocage encliquetables constituant des redans escamotables s'interposant entre l'épaulement aménagé dans ledit puits, et la face arrière, d'un bourrelet périphérique équipant le tube à raccorder, pour empêcher celui-ci de s'échapper de ladite partie femelle, raccord dans lequel les moyens de blocage encliquetables ou redans escamotables étant formés d'au moins deux poutres de section en forme de "U" et comprenant une âme susceptible de venir en appui contre la paroi, de forme tronconique, du logement, ces poutres étant réparties, également, autour du tube à raccorder et coopérant, à leur extrémité supérieure et inférieure, respectivement, avec l'épaulement du puits et la face arrière du bourrelet périphérique, les extrémités supérieures desdites poutres étant prolongées, en outre, par des moyens de préhension aptes à coopérer avec des moyens de verrouillage susceptibles d'empêcher les poutres à se déplacer radialement dans le puits et à franchir le rétreint.

Les avantages obtenus grâce à cette invention consistent, essentiellement, en ce que l'engagement de la partie mâle dans la partie femelle nécessite une simple poussée axiale sur l'une d'entre elles. La simplicité et la sécurité qu'offre cet assemblage permet d'envisager la robotisation du montage et de la connexion des conduites, équipées de tels raccords conformes à l'invention, à leurs appareillages respectifs.

Ceci représente un avantage incontestable notamment, dans le cadre de la production en grande série, telle que dans l'industrie automobile ou analogue.

L'invention est exposée ci-après, plus en détail à l'aide de dessins représentant seulement un mode d'exécution.

– la figure 1 représente une demi-vue et en coupe du raccord conforme à l'invention, les moyens de blocage encliquetables étant engagés dans la partie femelle mais non verrouillés dans cette dernière ;

– la figure 2 représente une vue équivalente à la figure 1, les moyens de blocage encliquetables étant, dans ce cas, verrouillés dans le puits constituant la partie femelle ;

– la figure 3, représente une vue schématisée et en coupe d'un raccord, conforme à l'invention, exécuté selon un premier mode de réalisation et en cours d'assemblage sur un tube à raccorder ;

– la figure 4 représente une vue de dessus et en fin de montage sur le tube du raccord illustré dans la figure 3;

– la figure 5 est une vue de dessus des moyens de blocage encliquetables ;

– la figure 6 représente un demi-vue et en coupe de la partie mâle d'un raccord, conforme à l'invention et exécuté selon un second mode de réalisation ;

– la figure 7 représente une demi-vue et en coupe du raccord illustré dans la figure 6, les moyens de blocage encliquetables étant maintenus verrouillés, le puits constituant la partie femelle ;

– la figure 8 représente, en coupe partielle, un mode particulier de la réalisation de l'extrémité du tube à raccorder;

– la figure 9 illustre la partie femelle d'un raccord susceptible d'accueillir l'extrémité du tube illustrée dans la figure 8.

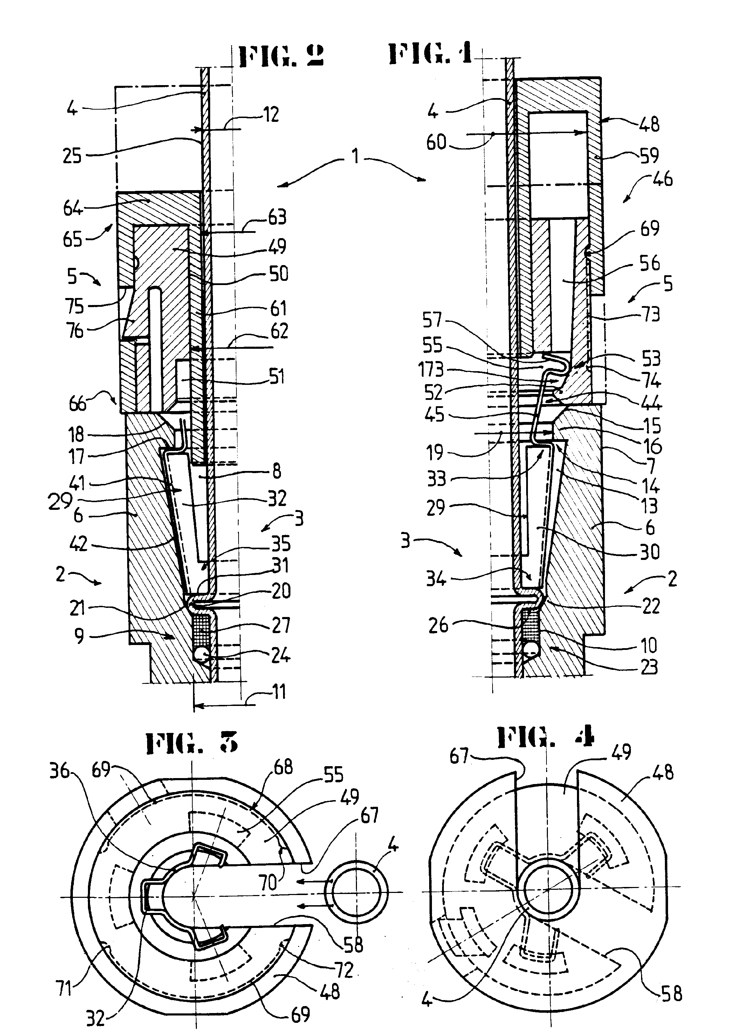

On se réfère, plus particulièrement, aux figures 1 à 5.

La présente invention est relative à un raccord 1 pour conduite flexible ou tuyau rigide intervenant dans un circuit hydraulique quelconque et, notamment, à haute pression.

En fait, le raccord, objet de la présente invention, se compose, d'une part, d'une partie femelle 2, associée à un appareillage quelconque et dans laquelle est introduite l'extrémité libre 3 d'un tube à raccorder 4. D'autre part, ledit raccord comporte une partie mâle 5 destinée à coopérer avec ladite partie femelle 2 pour immobiliser cette extrémité libre 3 dudit tube à raccorder 4 dans cette dernière.

La partie femelle 2 se présente, plus précisément, sous forme d'un puits 6 usiné soit directement dans l'appareillage à connecter soit dans une douille 7 rendue solidaire, par tout moyen connu, de l'extrémité d'une conduite flexible ou d'un tuyau rigide.

Ce puits 6 comporte une cavité 8 destinée à accueillir l'extrémité libre 3 du tube à raccorder 4 et présentant des diamètres différents selon la profondeur à laquelle on se situe. Aussi, ladite cavité 8 se décompose, partant du fond 9 du puits 6, en un alésage cylindrique 10 de diamètre 11 au moins égal au diamètre externe 12 du tube à raccorder 4 et d'un logement 13, de préférence tronconique, dont la base 14 est orientée en direction de l'ouverture 15 dudit puits 6. De plus, un rétreint 16 permet de définir, au niveau de cette base 14 du logement tronconique 13, un épaulement 17. Finalement, un chanfrein 18, aménagé au niveau de l'ouverture 15 facilite l'engagement du tube à raccorder 4 dans le puits 6.

A cet effet, il convient de remarquer que le diamètre 19 de ce dernier, au niveau du rétreint 16, est au moins égal au diamètre 12 du tube à raccorder 4 augmenté du bourrelet périphérique 20 équipant ce dernier à son extrémité libre 3. Un tel bourrelet périphérique 20 a pour objectif de contribuer à l'étanchéité du raccord 1, cette étanchéité étant assurée sensiblement dans le fond 9 du puits 6. A cet effet, on notera qu'une fois le tube à raccorder engagé dans le puits 6, ce bourrelet périphérique 20 vient à coopérer avec la paroi 21 d'un épaulement ou d'un tronçon tronconique 22, à angle d'ouverture important, reliant le logement tronconique 13 à l'alésage cylindrique 10.

Quant aux moyens 23 assurant, plus précisément, l'étanchéité du raccord 1, ceux-ci sont déterminés en fonction de la nature et de la pression du fluide véhiculé.

Aussi, de tels moyens 23 peuvent consister en un simple joint 24 aux propriétés choisies par l'Homme du Métier en fonction de données déterminées, ce joint 24 venant s'intercaler entre la paroi de l'alésage cylindrique 10 et le pourtour externe 25 du tube à raccorder 4. De plus, il est amené à coopérer, dans ces conditions, avec la face avant 26 du bourrelet périphérique 20.

Toutefois, une telle solution présente quelques inconvénients, notamment, dans le cas où le tube à raccorder 4, après assemblage présente un certain jeu axial dans le puits 6. En effet, cette situation peut provoquer, sous l'effet de pressions élevées, l'éjection du joint 24 au travers du tronçon tronconique 22. Diverses solutions sont envisageables pour remédier à un tel inconvénient. Ainsi, une bague anti-extrusion 27 peut être intercalée entre le joint 24 et la face avant 26 du bourrelet périphérique 20. De ce fait, quel que soit le jeu axial du tube à raccorder 4, dans le puits 6, le joint 24 est maintenu dans l'alésage cylindrique 10 et en coopération avec l'extrémité libre 3 dudit tube à raccorder 4.

Il peut encore être envisagé d'immobiliser, axialement, le joint 24. A cet effet, on réalise, selon le cas, dans le pourtour externe 25 du tube à raccorder 4, ou dans la paroi de l'alésage cylindrique 10, une rainure permettant d'accueillir ledit joint 24.

On peut encore procéder à la combinaison des solutions proposées ci-dessus et immobiliser, axialement, le joint 24 tout en intercalant entre ce dernier et la face avant 26 du bourrelet périphérique 20, une bague anti-extrusion 27.

Finalement, il peut être fait appel en tant que moyen d'étanchéité 23, à un joint chevrons 28 représenté dans la figure 7 et dénommé ainsi en raison de sa morphologie.

La partie mâle 5 se présente sous forme de moyens de blocage encliquetables 29 constituant des redans escamotables 30 s'interposant entre l'épaulement 17, aménagé dans le puits 6, et la face arrière 31, orientée en direction de l'ouverture 15 de ce dernier, du bourrelet périphérique 20 disposé à l'extrémité libre 3 du tube à raccorder 4. De tels redans escamotables 30 sont, ainsi, en mesure de s'opposer à une action radiale exercée sur le tube à raccorder 4, tentant d'extraire celui-ci de la partie femelle 2, cette action correspondant à l'effet du fluide sous pression véhiculé dans des conduites flexibles, tuyaux rigides et appareillages ainsi connectés.

Selon une caractéristique de la présente invention, ces moyens de blocage encliquetables 29 ou redans escamotables 30 se composent d'au moins deux poutres 32 réparties également autour du tube à raccorder 4 et coopérant, à leur extrémité supérieure 33 et inférieure 34, respectivement, avec l'épaulement 17 du puits 6 et la face arrière 31 du bourrelet périphérique 20.

Tel que précisé ci-dessus, le logement 13 est de forme tronconique. Une telle configuration diminue, sensiblement, les risques de flambage des poutres 32 lorsque les efforts de compression qui leur sont appliqués sont élevés.

Préférentiellement, les poutres 32 sont reliées, à leur extrémité supérieure 33 et/ou leur extrémité inférieure 34, par des moyens de liaison 35, à caractère élastique, pour permettre, non seulement, l'engagement, mais, en outre, le retrait desdites poutres 32 du puits 6. La nature élastique de ces moyens de liaison 35 est nécessaire pour conférer à ces poutres 32 une certaine mobilité radiale, d'une part, pour autoriser leur passage au niveau du rétreint 16 disposé à l'entrée du puits 6 et, d'autre part, pour s'assurer de la coopération de leur extrémité supérieure 33 avec l'épaulement 17.

Plus précisément, ces moyens de liaison élastiques 35 sont constitués par une lame annulaire 36 fendue ou non et à laquelle sont rendues solidaires les extrémités supérieure 33 et/ou inférieure 34 des différentes poutres 32.

Les figures, jointes en annexe, illustrent des moyens de blocage encliquetables 29 composés de trois poutres 32 reliées entre elles, uniquement, au niveau de leur extrémité inférieure 34 au moyen d'une lame annulaire 36. Cette disposition présente l'avantage de pouvoir maintenir les poutres 32, au niveau de leur extrémité inférieure 34, dans un cercle 37 de diamètre légèrement inférieur au passage délimité par le rétreint 16 et, ainsi, faciliter l'engagement desdits moyens de blocage encliquetables 29 dans le puits 6.

Le choix d'une lame annulaire 36 fendue ou non, dépendra, initialement, du mode d'obtention de cette dernière, mais, en outre, du type d'assemblage envisagé de la partie mâle 5 sur le tube à raccorder 4. Notamment, au cas où le bourrelet périphérique 20 équipant l'extrémité libre 3 de ce dernier est réalisé avant cet assemblage, l'opérateur doit être en mesure d'emboîter, latéralement, ladite partie mâle 5 sur ledit tube à raccorder 4. Aussi, la lame annulaire 36 doit-elle être fendue, mais, en outre, présenter une ouverture 38 sensiblement égale ou à peine inférieure au diamètre 12 du tube à raccorder 4.

En ce que concerne le mode d'obtention de ces moyens de blocage encliquetables 29, il est considéré que la découpe et l'emboutissage d'un plat métallique constituent la solution la moins onéreuse. Un tel procédé a pour effet de conférer aux poutres 32 une section en forme de "U" et elles comportent, ainsi, deux ailes parallèles 39, 40, solidaires d'une âme 41, susceptible de venir en appui contre la paroi 42 du logement 13. Par ailleurs, la lame annulaire 36 se décompose en un ou plusieurs segments 43 reliant les ailes 39, 40 des poutres 32, au niveau de l'extrémité inférieure 34 de ces dernières.

Selon une autre caractéristique de l'invention, ces moyens de blocage encliquetables 29 comportent des moyens de préhension 44 facilitant, considérablement, leur engagement ou leur retrait du puits 6. Préférentiellement, ces moyens de préhension 44 sont constitués par des languettes 45 équipant l'extrémité supérieure 33 des poutres 32 et correspondant au prolongement de l'âme 41 de ces dernières. Plus précisément, ces languettes 45 sont initialement, repliées au-dessus du chant supérieur desdites poutres 32 de manière à enjamber l'épaulement 17 formé par le rétreint 16 avant d'émerger du puits 6 au travers de l'ouverture 15 de ce dernier.

Avantageusement, la largeur de ces languettes 45 sera déterminée de telle sorte, qu'après pliage au-dessus du chant supérieur des poutres 32, elles viennent à recouvrir, simultanément, les arrêtes tranchantes que constituent les chants supérieurs des ailes parallèles 39, 40, de manière à empêcher celles-ci de s'incruster dans l'épaulement 17 du puits 6 sous l'effet de la pression. En effet, un tel résultat empêcherait le démontage ou le remontage ultérieur du raccord 1. Dans ce même but, l'âme 41 des poutres 32 peut être prolongée à l'extrémité inférieure 34 de ces dernières puis repliée au-dessus du chant inférieur des ailes parallèles 39, 40 de manière à constituer une portée plus importante venant à coopérer avec le bourrelet périphérique 20.

Conformément à l'invention, ce raccord 1 comporte, par ailleurs, des moyens de verrouillage 46 de la partie mâle 5 dans la partie femelle 2. Il convient, en effet, de s'assurer qu'aucune action radiale ne puisse être exercée, en cours d'utilisation, sur les poutres et, finalement, provoquer inopinément, le dégagement de l'extrémité libre 3 du tube à raccorder 4 de la partie femelle.

Plus précisément, ces moyens de verrouillage 46 se composent, d'une part, d'une bague de retenue 49 assurant leur liaison avec les moyens de blocage encliquetables 29 et, d'autre part, d'un verrou 48 agissant sur ces derniers de manière à les immobiliser dans le puits 6 que constitue la partie femelle 2.

Deux modes de réalisation, correspondant à deux types d'utilisation distincte du raccord 1 sont illustrées, respectivement, dans les figures 1 à 4 et 6 et 7.

Ainsi, la bague de retenue 49, illustrée dans les figures 1 à 4 et correspondant à un premier mode de réalisation, est susceptible de coopérer avec les moyens de préhension 44 des moyens de blocage encliquetables 29. Dans ce but, cette bague de retenue 49 comporte un alésage central 50, d'axe confondu avec l'axe du tube à raccorder 4 et, dans lequel est usiné un décrochement 51 débouchant de ladite bague de retenue 49, en direction du puits 6, au travers d'un rétreint 52. Dans ce décrochement 51 sont engagées les extrémités libres 53 des languettes 45 formant les moyens de préhension 44.

Plus précisément, les extrémités libres 53 de ces languettes 45 sont repliées de manière à s'écarter, radialement, de l'axe de tube à raccorder 4 et s'inscrire, dans un cercle de diamètre supérieur au rétreint 52. Ces languettes 45 sont ainsi immobilisées dans la bague de retenue 49.

Selon un autre mode d'exécution, ces extrémités libres repliées 53 des languettes 45 peuvent venir s'insérer dans des cavités 55 aménagées dans la paroi interne du décrochement 51. En fait, de telles cavités 55 évitent la conception d'un rétreint circonférentiel dans la bague de retenue 49, conception particulièrement délicate, notamment, lorsque cette dernière est réalisée en un matériau synthétique moulable. En effet, un tel rétreint circonférentiel constitue une dépouille négative à éviter dans le cadre d'un tel procédé. Contrairement, les cavités 55 peuvent être obtenues, aisément, moyennant l'utilisation de noyaux appropriés implantés dans le moule et qui sont à l'origine des cheminées 56 présentes dans ladite bague de retenue 49.

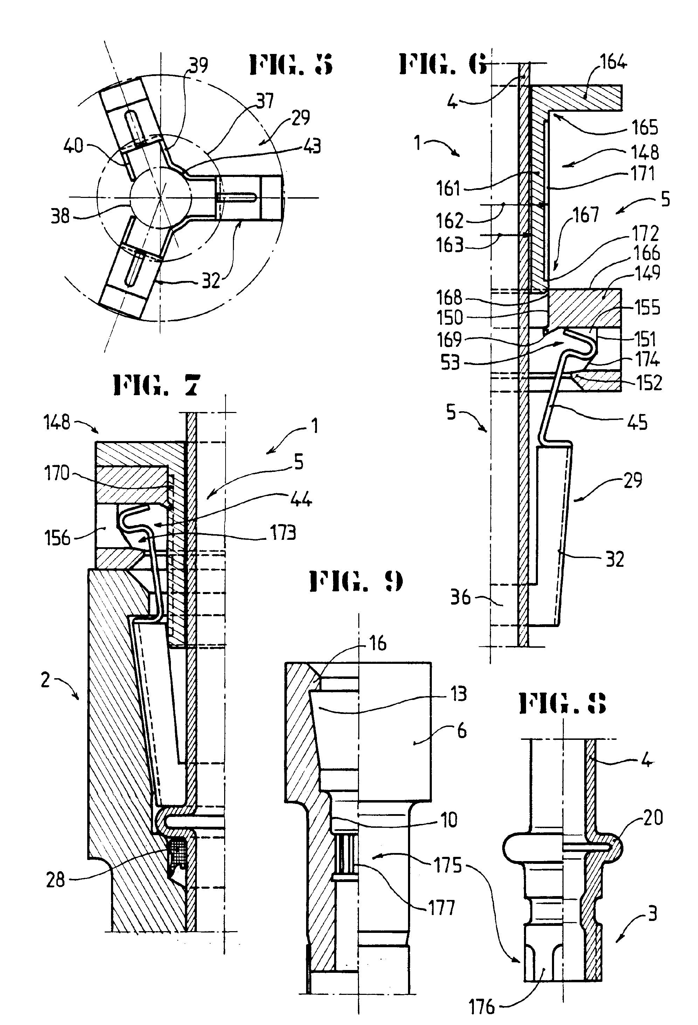

On remarque, par ailleurs, dans les figures 1 et 6, que les extrémités libres 53 des languettes 45 s'étendent, non seulement radialement, de manière à s'écarter de l'axe du tube à raccorder 4, mais, en outre sont repliées à cent quatre vingt degrés de manière à former un "U". En fait, cette morphologie permet de supprimer les arêtes vives qui peuvent gêner, normalement, l'engagement de ces moyens de préhension 44 dans le décrochement 51 de la bague de retenue 49. Toutefois, on notera que ces extrémités libres 57 des languettes 45 ne sont nullement limitées à une telle morphologie.

Tout comme pour les moyens de blocage encliquetables 29, cette bague de retenue 49, comporte, nécessairement, une ouverture latérale 58 ajustée au diamètre 12 du tube à raccorder 4 pour autoriser l'engagement de ladite bague de retenue 49 sur ce dernier après formage du bourrelet périphérique 20.

Quant au verrou 48, composant les moyens de verrouillage 46, celui-ci se présente sous forme d'un manchon 59 s'engageant au dessus de la bague de retenue 49 et comportant, à cet effet, un diamètre interne 60 ajusté au diamètre externe de cette dernière. Ce manchon 59 comporte, en outre, une douille interne 61 de diamètre externe 62 légèrement inférieur au diamètre de l'alésage central 50 de la bague de retenue 49. De plus, le diamètre interne 63 de cette douille interne 61 est ajusté aux dimensions du tube à raccorder 4, afin d'autoriser son coulissement sur celui-ci.

En fait, la douille interne 61 est rendue solidaire d'un flasque annulaire 64 disposé à l'extrémité 65, située du côté opposé à la partie femelle 2, du manchon 59. Par ailleurs, elle se présente saillante par rapport à l'extrémité opposée 66 de ce dernier de sorte qu'elle soit en mesure de s'engager dans le puits 6 en s'interposant entre les poutres 32 et la paroi externe du tube à raccorder 4.

En somme, cette douille interne 61 permet d'annihiler la mobilité radiale desdites poutres 32 et, par là même, d'empêcher ces dernières de franchir le rétreint 16.

Au cours de l'engagement des moyens de blocage encliquetables 29 dans le puits 6, ce verrou 48 doit être maintenu, partiellement engagé sur la bague de retenue 49 afin de ne pas gêner le débattement radial des poutres 32. Toutefois, on notera que dans le cas contraire, la partie mâle 5 n'étant en mesure de s'emboîter dans la partie femelle 2, cette anomalie peut être aisément repérée au moyen de capteurs appropriés lors du montage de ces raccords 1 à l'aide de machines robotisées.

La fonction de ce verrou 48 est, en réalité, double. En effet, d'une part, il a pour office d'immobiliser les moyens de blocage encliquetables 29 dans le puits 6 et, d'autre part, d'empêcher le déboîtement latéral de la partie mâle 5, composée desdits moyens de blocage encliquetables 39 et des moyens de verrouillage 46, du tube à raccorder 4.

Aussi, ce verrou 48 ou manchon 59 comporte une ouverture latérale aux dimensions déterminées en fonction de la section du tube à raccorder 4, cette ouverture latérale 67 venant se positionner au droit de l'ouverture latérale 58, correspondant à la bague de retenue 49, lors du montage du raccord 1 sur ledit tube à raccorder 4. Le manchon 59 comporte, par ailleurs, des moyens 68 pour pivoter sur la bague de retenue 49 afin de décaler leur ouverture respective 58, 67. En fait, ces moyens de rotation 68 se composent, d'une part, de rainures semi-circulaires 69 aménagées sur le pourtour externe de la bague de retenue 49 et, d'autre part, de bossages 70 présents sur la paroi interne du manchon 59 et susceptibles de coulisser dans lesdites rainures semi-circulaires 69. Avantageusement, ces dernières aboutent, à leurs extrémités, à des cavités 71, 72 dans lesquelles viennent s'insérer les bossages 70 en fin de rotation du manchon 59 sur la bague de retenue 49.

Partant de la position décalée des ouvertures 58, 67, l'un par rapport à l'autre, il doit être possible de conférer au verrous 48 un déplacement axial afin d'assurer l'engagement de la douille interne 61 dans le puits 6. Aussi, dans les cavités 72, dans lesquelles sont logés les bossages 70, après décalage angulaire des ouvertures 58, 67, débouchent des rainures 73 aménagées selon des génératrices, sur le pourtour externe de la bague de retenue 49. Ainsi, le long de ces rainures 73 sont amenés à se déplacer les bossages 70 sous l'action d'une poussée suffisante exercée sur le verrou 48.

Tout comme précédemment, la position verrouillée peut être repérée au moyen d'une cavité 74 aboutant à l'extrémité inférieure des rainures 73 et destinée à accueillir les bossages 70.

Selon un autre mode de réalisation représenté dans la figure 2, une ouverture 75 peut être aménagée dans la paroi du manchon 59, ouverture 75 servant à accueillir, en position verrouillée, un ergot de blocage 76 solidaire de la paroi externe de la bague de retenue 49. Plus précisément, cet organe de blocage 76 sera disposé, de préférence, au droit d'une cheminée 56 présente dans la bague de retenue 49 de sorte qu'il lui soit possible de s'effacer, par effet d'élasticité, au passage du manchon 59.

Bien entendu, les ouvertures latérales 58 et 67 pratiquées, respectivement, dans la bague de retenue 49 et dans le manchon 59 ne sont nécessaires qu'au cas où le raccord 1 est associé au tube à raccorder 4, qu'après formage du bourrelet cylindrique 20. De même dans le cadre d'un telle solution, les moyens de rotation 68 sont totalement inutiles, seul le déplacement axial du verrou 48 sur la bague de retenue 49 doit être rendu possible.

Les figures 6 et 7 représentent un autre mode de réalisation des moyens de verrouillage 46 correspondant au cas où le raccord 1 est définitivement associé au tube à raccorder 4. Ces moyens de verrouillage 46 empruntent, toutefois, une configuration sensiblement identique à ceux décrits ci-dessus dans ce sens qu'ils sont composés d'une bague de retenue 149, destinée à coopérer avec les moyens de préhension 44 des moyens de blocage encliquetables 29, et d'un verrou 148.

La bague de retenue 149 comporte un alésage central 150 présentant un décrochement 151 débouchant du côté de la partie mâle 5 au travers de rétreints 152. Ceux-ci ont pour effet de maintenir les extrémités libres 53 des languettes 45, correspondant aux moyens de préhension 44, dans ledit décrochement 151. A note que ces extrémités libres 53 des languettes 45 peuvent reprendre une configuration identique à celle décrite ci-dessus. Par ailleurs, tout comme précédemment, les rétreints 152 peuvent être dus à la présence des cavités 155 aménagées dans le décrochement 151.

Dans le cas d'une conception de la bague de retenue 149 par un procédé de moulage, ces cavités 155 seront obtenues en disposant, radialement, un certain nombre de noyaux dans le moule, ces noyaux étant à l'origine des ouvertures 156 présentes sur le pourtour externe de la bague de retenue 149.

Quant au verrou 148, celui-ci se présente sous forme d'une douille 161 aux dimensions extérieures 162 ajustées à l'alésage 150 de la bague de retenue 149 afin d'autoriser son engagement dans cette dernière. Cette douille 161 présente par ailleurs, un diamètre intérieur 163 fonction de la section du tube à raccorder 4. Ainsi, elle est en mesure de venir s'intercaler entre le pourtour externe dudit tube à raccorder 4 et les poutres 32 des moyens de blocage encliquetables 29 empêchant ceux-ci de s'extraire du puits 6. Un flasque 164 solidaire de l'extrémité supérieure 165 de ladite douille 161 limite l'engagement de cette dernière dans la partie femelle 2 en venant en butée avec la face supérieure 166 de la bague de retenue 149. Avantageusement, ces moyens de verrouillage 46 exécutés selon le second mode de réalisation sont réalisés par un procédé de moulage et, ce, en un seul tenant. Tel que représenté dans la figure 6, le verrou 148 et, notamment, la douille 161 est rendue solidaire, en plusieurs points, à son extrémité inférieure 167, du bord supérieur 168 de l'alésage central 150 présent dans la bague de retenue 149.

Ainsi, au moment du raccordement de la partie mâle 5 à la partie femelle 2 et, plus précisément, après engagement des moyens de blocage encliquetables 29 dans le puits 6, les différents points de liaison reliant à la bague de retenue 149, la douille 161, sont amenées à céder sous l'effet d'une poussée exercée sur cette dernière.

Cependant, dans sa progression dans ledit alésage central 150 de la bague de retenue 149, la douille 161 est amenée à rencontrer des ergots de blocage 169 qui, par effet d'élasticité, sont amenés à s'effacer. Ils viennent alors à coulisser dans des rainures 170 pratiquées sur le pourtour externe 171 de cette douille 161 et disposées selon des génératrices. Contrairement, en cas de déconnexion de la partie mâle 5 par rapport à la partie femelle 2, les ergots de blocage 169 forment des redans en venant buter contre les rebords inférieurs 172 des rainures 170. Ils maintiennent, ainsi, associé le verrou 148 à la bague de retenue 149 suite à un premier montage du raccord 1.

Tel qu'exposé ci-dessus le retrait des moyens de blocage encliquetables 29 du puits 6 ne peut être obtenu qu'après un resserrement des poutres 32 sur le pourtour externe du tube à raccorder 4 afin de franchir le rétreint 16.

De manière à éviter une manipulation difficile et longue des moyens de blocage encliquetables 29, lors d'une telle opération de déconnexion, la bague de retenue 49, 149 peut comporter, avantageusement, des moyens 173 pour effectuer un tel resserrement des poutres 32 sur le pourtour externe du tube à raccorder 4, par simple traction sur les moyens de verrouillage 46 et notamment la bague de retenue 49, 149. Préférentiellement, de tels moyens 173 sont constitués par un tronçon tronconique 174 reliant le décrochement 51, 151 présent dans ladite baguette de retenue 49, 149 aux rétreints 52, 152.

Ainsi, en exerçant une traction sur ladite bague de retenue 49, 149, les extrémités libres 53 des languettes 45 constituant les moyens de préhension 44, viennent à évoluer le long du tronçon tronconique 174 et, de ce fait, à se resserrer sur le tube à raccorder 4 entraînant, par là même, les poutres 32.

A la lecture de ce qui précède, on constate que la conduite flexible ou le tuyau rigide connecté au moyen d'un raccord 1 conforme à l'invention, à un appareillage quelconque, peut être aisément orienté angulairement par rapport à ce dernier, tout le moins avant la mise sous pression du circuit hydraulique. Cette caractéristique peut représenter un avantage notamment, dans le cas où l'assemblage est effectué dans des conditions difficiles avec un minimum d'espace. Toutefois, dans d'autres situations, il peut s'avérer nécessaire de positionner angulairement la conduite flexible ou le tuyau rigide dès le montage, par rapport à l'appareillage hydraulique considéré.

Aussi, le raccord 1, conforme à l'invention, peut comporter des moyens de repérage angulaires 175 du tube à raccorder 4 dans le puits 6. De tels moyens de repérage 175 consistent à aménager sur la périphérie et à l'extrémité libre 3 du tube à raccorder 4, au-delà des moyens d'étanchéité 23 des bossages ou arêtes 176 susceptibles de s'insérer dans des cannelures 177 pratiquées dans l'alésage cylindrique 10 situé au fond 9 du puits 6.

En résumé, ces moyens de repérage 175 permettent d'immobiliser en rotation et, ce, avec un choix de l'orientation, des tubes à raccorder 4 par rapport à la partie femelle du raccord 1 donc de l'appareillage auquel il est amené à être connecté.

Au vu de ce qui précède, on constate que le raccord 1, conforme à l'invention, présente de sérieux avantages par rapport aux raccords utilisés antérieurement dans les circuits hydrauliques notamment, soumis à des pressions élevées. De plus, en raison de ces différents modes de réalisation possibles, exposés ci-dessus, il est en mesure de satisfaire à toutes les conditions imposées par le milieu environnant. A ce sujet, on notera que, bien que décrit sous forme de pièce moulée en un matériau synthétique, les moyens de verrouillage 46 pourront être obtenus, par d'autres procédés et, plus particulièrement, dans des matériaux différents pour satisfaire, notamment, à des températures de fonctionnement élevées, températures auxquelles ne peuvent résister les thermoplastiques les plus communément utilisés.

## Revendications

1. Raccord pour conduite flexible ou tuyau rigide, notamment, de circuit hydraulique haute pression, comprenant, d'une part, une partie femelle (2) dans laquelle est introduite l'extrémité libre (3) d'un tube à raccorder (4), cette partie femelle (2) étant formée par un puits (6) se décomposant partant du fond (9), en un alésage cylindrique (10) de diamètre (11) au moins égal au diamètre externe (12) du tube à raccorder (4), un logement (13), un rétreint (16) définissant avec ce dernier un épaulement (17), et des moyens assurant l'étanchéité du raccord et, d'autre part, des moyens de blocage encliquetables (29) constituant des redans escamotables (30) s'interposant entre l'épaulement (17) aménagé dans ledit puits (6), et la face arrière (31), d'un bourrelet périphérique (20) équipant le tube à raccorder (4), pour empêcher celui-ci de s'échapper de ladite partie femelle (2), raccord dans lequel les moyens de blocage encliquetables (29) ou redans escamotables (30) sont formés d'au moins deux poutres (32) de section en forme de "U" et comprenant une âme (41) susceptible de venir en appui contre la paroi (42), de forme tronconique, du logement (13), ces poutres (32) étant réparties, également, autour du tube à raccorder (4) et coopérant, à leur extrémité supérieure (33) et inférieure (34), respectivement, avec l'épaulement (17) du puits (6) et la face arrière (31) du bourrelet périphérique (20), les extrémités supérieures (33) desdites poutres (32) étant prolongées, en outre, par des moyens de préhension (44) aptes à coopérer avec des moyens de verrouillage (46) susceptibles d'empêcher les poutres (32) à se déplacer radialement dans le puits (6) et à franchir le rétreint (16).

2. Raccord selon la revendication 1, caractérisé par le fait que les moyens de blocage encliquetables (29) sont obtenus par découpage et emboutissage d'un plat métallique de manière à conférer aux poutres (32) leur section en forme de "U", ces poutres (32) étant reliées, à leur extrémité supérieure (33) et/ou à leur extrémité inférieure (34) par des moyens de liaison (35), à caractère élastique, constitués par une ou des lames annulaires (36) se décomposant en un ou plusieurs segments (43) reliant les ailes parallèles (39, 40) desdites poutres (32) au niveau de l'extrémité inférieure (34) et/ou supérieure (33) de ces dernières.

3. Raccord selon les revendications 1 et 2, caractérisé par le fait que les moyens de préhension (44) sont constitués par des languettes (45) équipant l'extrémité supérieure (33) des poutres (32) et correspondant au prolongement de l'âme (41) de ces dernières, ces languettes (45) étant repliées au-dessus desdites poutres (32), d'une part, pour couvrir les chants supérieurs de leurs ailes parallèles (39, 40) et, d'autre part, pour enjamber l'épaulement (17) formé par le rétreint (16) de manière à émerger du puits (6) au travers de l'ouverture (15).

4. Raccord selon les revendications 1 et 2, caractérisé par le fait que l'âme (41) des poutres (32) est prolongée à l'extrémité inférieure (34) de ces dernières et repliée au-dessus du chant inférieur des ailes parallèles (39, 40) pour constituer une portée plus importante venant à coopérer avec le bourrelet périphérique (20) du tube à raccorder (4).

5. Raccord selon la revendication 1, caractérisé par le fait que les moyens de verrouillage (46) sont constitués, d'une part, par une bague de retenue (49, 149) assurant la liaison avec les moyens de préhension (44) coopérant avec les moyens de blocage encliquetables (29) et, d'autre part, par un verrou (48, 148) agissant sur ces derniers afin de les immobiliser dans le puits (6).

6. Raccord selon la revendication 5, caractérisé par le fait que la bague de retenue (49, 149) comporte un alésage central (50, 150) d'axe confondu avec celui du tube à raccorder (4) et dans lequel est usiné un décrochement (51, 151) débouchant de ladite bague de retenue (49, 149) en direction du puits (6) au travers d'un rétreint (52, 152), dans ce décrochement (51, 151) étant engagées les extrémités libres (53) des languettes (45) formant les moyens de préhension (44), ces extrémités libres (53) étant repliées de manière à s'écarter, radialement, de l'axe du tube à raccorder (4) et s'inscrire dans un cercle (54) de diamètre supérieur au rétreint (52, 152) ou s'insérer dans des cavités (55, 155) aménagées dans les parois du décrochement (51, 151).

7. Raccord selon la revendication 5, caractérisé par le fait que le verrou (48) se présente sous forme d'un manchon (59) s'engageant au-dessus de la bague de retenue (49) et comportant une douille interne (61) au diamètre externe (62) légèrement inférieur au diamètre de l'alésage central (50) de ladite bague de retenue (49) et de diamètre interne (63) ajusté à la section du tube à raccorder (4), ladite douille interne (61) se présentant, en outre, saillante par rapport à l'extrémité (66) orientée en direction de la partie femelle (5) du manchon (59), de sorte qu'elle soit en mesure de s'engager dans le puits (6) en s'interposant entre la paroi dudit tube à raccorder (4) et les poutres (32) et en empêchant celles-ci de franchir le rétreint (16).

8. Raccord selon la revendication 7, caractérisé par le fait que le manchon (59) présente, dans sa paroi, une ouverture (75) servant à accueillir, en position verrouillée, un ergot de blocage (76) solidaire de la paroi externe de la bague de retenue (49).

9. Raccord selon les revendications 2 et 5, caractérisé par le fait que la ou les lames annulaires (36), reliant les poutres (32), la bague de retenue (49) et le verrou (48) comportent une ouverture latérale, respectivement, (38), (58) et (67), aux dimensions ajustées à la section du tube à raccorder (4) pour autoriser leur emboîtement latéral sur ce dernier en cas de formage du bourrelet périphérique (20) avant montage de la partie mâle (5) dudit raccord (1).

10. Raccord selon la revendication 9, caractérisé par le fait que le manchon (59) comporte des moyens (68) pour pivoter sur la bague de retenue (49) et empêcher le déboîtement latéral de la partie mâle (5) du tube à raccorder (4) en décalant, angulairement, les ouvertures (58, 67), respectivement, du manchon (59) et de la bague de retenue (49), ces moyens (68) étant constitués, d'une part, de rainures semi-circulaires (69) aménagées sur le pourtour externe de la bague de retenue (49) et, d'autre part, de bossages (70) présents sur la paroi interne du manchon (59) et susceptibles de coulisser dans lesdites rainures semi-circulaires (69), celles-ci aboutant au niveau de leurs extrémités, à des cavités (71, 72) dans lesquelles viennent se loger les bossages (70) en fin de rotation du manchon (59) sur la bague de retenue (49), dans les cavités (72), occupées par les bossages (70) après décalage angulaire des ouvertures (58, 67), débouchant, en outre, une rainure (73) aménagée, selon des génératrices, sur le pourtour externe de la bague de retenue (49) pour autoriser le déplacement axial du verrous (48) et l'engagement de la douille interne (61) dans le puits (6).

11. Raccord selon la revendication 5, caractérisé par le fait que le verrou (148) est formé par une douille (161) susceptible de coulisser dans l'alésage central (150) de la bague de retenue (149) et comportant un diamètre intérieur (163) ajusté à la section du tube à raccorder (4), ladite douille (161) comportant, en outre, d'une part, un flasque (164) solidaire de son extrémité supérieure (165) et destinée à coopérer, en position de verrouillage, avec la face supérieure (166) de la bague de retenue (149) pour limiter l'engagement de ladite douille (161) dans le puits (6) et, d'autre part, des rainures (170) pratiquées sur son pourtour externe (171) et dans lesquelles coulissent des ergots de blocage (169) disposés dans l'alésage central (150) de la bague de retenue (149), pour empêcher ledit verrou (148) de se dissocier de cette dernière.

12. Raccord selon la revendication 6, caractérisé par le fait que la bague de retenue (49, 149) comporte des moyens (173) pour provoquer le resserrement des poutres (32) sur le pourtour externe du tube à raccorder (4) et assurer le retrait des moyens de blocage encliquetables (29) du puits (6) suite à une traction exercée sur les moyens de verrouillage (46), ces moyens (173) étant constitués par un tronçon tronconique (173), reliant le décrochement (51, 151), présent dans la bague de retenue (49, 149), et le rétreint (52, 152), et le long duquel sont amenées à évoluer par traction sur ladite bague de retenue (49, 149) les extrémités libres (53) des languettes (45) entraînant le déplacement radial des poutres (32).

13. Raccord selon la revendication 1, caractérisé par le fait qu'il comporte des moyens de repérage angulaire (175) du tube à raccorder (4) dans le puits (6) constitués, d'une part, par des bossages ou arêtes (176) aménagées à l'extrémité libre (3) dudit tube à raccorder (4) au-delà de moyens d'étanchéité (29) et, d'autre part, par des cannelures (177) pratiquées dans l'alésage cylindrique (10) situé au fond (9) du puits (6).

**Patentansprüche**

1. Anschlußsystem für einen biegsamen Schlauch oder ein starres Rohr, nämlich einer unter hohem Druck stehenden Leitung, umfassend, einerseits, einen weiblichen Teil (2), in den das freie Ende (3) eines anzuschließenden Rohres (4) eingeführt wird, wobei dieser weibliche Teil (2) aus einem Loch (6) gebildet ist, das, vom Boden (9) ab anfangend, aus einer zylindrischen Bohrung (10), deren Durchmesser (11) zumindest gleich des Außendurchmessers (12) des anzuschließenden Rohres (4) ist, einer Aussparung (13), einer Verengung (16), die mit dieser letzten einen Ansatz (17) bestimmt, und Mitteln, die die Dichtigkeit des Anschlußsystems sichern, besteht und, andererseits, einklinkbare Sperrmittel (29), die einziehbare Auszahnungen (30) bilden, die sich zwischen den im Loch (6) vorgesehenen Ansatz (17) und die Hinterfläche (31) eines Umkreiswulstes (20), mit dem das anzuschließende Rohr (4) versehen ist, schieben, zum Vermeiden, daß dieses letzte aus dem genannten weiblichen Teil (2) entweicht, im welchen Anschlußsystem die einklinkbaren Sperrmittel oder einziehbaren Auszahnungen aus zumindest zwei Trägern (32) eines "U"-förmigen Querschnitts gebildet sind und einen Kern (41) umfassen, der in der Lage ist, an die kegelstumpfartige Wand (42) der Aussparung (13) anzulehnen, wobei diese Träger (32) gleichmäßig um das anzuschließenden Rohr (4) herum verteilt sind und an deren oberen (33) und unteren Ende (34) respektive mit dem Ansatz (17) des Lochs (6) und der Hinterfläche (31) des Umkreiswulstes (20) zusammenarbeiten, wobei die oberen Enden (33) der genannten Träger (32) außerdem durch Greifmittel (44) verlängert werden, die in der Lage sind, mit Sperrmitteln (46) zusammenzuarbeiten, die in der Lage sind, zu vermeiden, daß sich die Träger (32) radial im Loch (6) verschieben und bis über die Verengung (16) hinaus ragen.

2. Anschlußsystem nach Anspruch 1, dadurch gekennzeichnet, daß die einklinkbaren Sperrmittel (29) durch Ausschneiden und Tiefziehen eines metallischen Flacheisens erhalten werden, sodaß den Trägern (32) deren "U"-förmigen Querschnitt erteilt wird, wobei diese Träger (32) an deren oberen (33) und-/oder unteren Ende (34) durch Verbindungsmittel (35) elastischer Art verbunden werden, die aus einem oder mehreren ringförmigen Blechen (36) bestehen, die aus einem oder mehreren Abschnitten (43), die die Flügel (39, 40) der genannten Träger (32) im Bereich des unteren (34) und/oder oberen Endes (34) dieser letzten mit einander verbinden, bestehen.

3. Anschlußsystem nach Ansprüchen 1 und 2, dadurch gekennzeichnet, daß die Greifmittel (44) aus Laschen (45) bestehen, mit denen das obere Ende (33) der Träger (32) ausgerüstet sind und der Verlängerung des Kerns (41) dieser letzten entsprechen, wobei diese Laschen (45) über die genannten Träger (32) hinaus umgefaltet sind, um, einerseits, die oberen Ränder deren gleichlaufenden Flügel (39, 40) zu überdecken und, andererseits, den von der Verengung (16) gebildeten Ansatz (17) zu übergreifen, sodaß sie durch die Öffnung (15) hindurch aus dem Loch (6) herausragen.

4. Anschlußsystem nach Ansprüchen 1 und 2, dadurch gekennzeichnet, daß der Kern (41) der Träger (32) am unteren Ende (34) dieser letzten verlängert und über den unteren Rand der gleichlaufenden Flügel (39, 40) hinaus umgefaltet wird, um eine größere Tragfläche, die mit dem Umkreiswulst (20) zusammenarbeitet, zu bilden.

5. Anschlußsystem nach Anspruch 1, dadurch gekennzeichnet, daß die Sperrmittel (46) aus, einerseits, einem Sprengring (49, 149), der die Verbindung mit den Greifmitteln (44), die mit den einklinkbaren Sperrmitteln (29) zusammenarbeiten, sichert und, andererseits, einem Riegel (48, 148), der diese letzten betätigt, sodaß sie im Loch (6) festgelegt werden, bestehen.

6. Anschlußsystem nach Anspruch 5, dadurch gekennzeichnet, daß der Sprengring (49, 149) eine Zentralbohrung (50, 150) umfaßt, deren Achse derjenigen des anzuschließenden Rohres (4) entspricht, in der ein Rücksprung (51, 151) verarbeitet ist, der vom Sprengring (49, 149) her in der Richtung des Lochs (6) durch eine Verengung (52, 152) hindurch ausmündet, wobei in diesen Rücksprung (51, 151) die freien Enden (53) der die Greifmittel (44) bildenden Laschen (45) hineingeführt werden, wobei diese freien Enden (53) so gefalten werden, daß sie sich radial von der Achse des anzuschließenden Rohres (4) entfernen und in einem Kreis (54), dessen Durchmesser größer als die Verengung (52) ist, eingeschrieben sind oder in in den Wänden des Rücksprungs (51, 151) vorgesehenen Hohlräume (55, 155) hineinführen.

7. Anschlußsystem nach Anspruch 5, dadurch gekennzeichnet, daß der Riegel (48) als eine Muffe (59), die auf den Sprengring (49) geschoben wird, ausgestaltet ist und eine Innenbüchse (61), deren Außendurchmesser (62) geringfügig kleiner als der Durchmesser der Zentralbohrung (50) des genannten Sprengringes (49) ist, deren Innendurchmesser (63) dem Querschnitt des anzuschließenden Rohres (4) angepaßt ist, umfaßt, wobei die genannte Innenbüchse (61) außerdem als bezüglich des dem weiblichen Teil (5) der Muffe (59) zugewandten Endes (66) herausragend ausgestaltet ist, sodaß sie in der Lage ist, in das Loch (6) hineinzuführen, wobei sie sich zwischen die Wand des anzuschließenden Rohres (4) und die Träger (32) schiebt und vermeidet, daß diese letzten über die Verengung (16) hinaus gehen.

8. Anschlußsystem nach Anspruch 7, dadurch gekennzeichnet, daß die Muffe (59) in deren Wand eine Öffnung (75) aufweist, die dazu dient, in verriegelter Position eine fest mit der Außenband des Sprengringes (49) verbundene Sperrstift (76) aufzunehmen.

9. Anschlußsystem nach Ansprüchen 2 und 5, dadurch gekennzeichnet, daß das oder die ringförmigen Bleche (36), die die Träger (32) verbinden, der Sprengring (49) und der Riegel (48) eine Seitenöffnung, respektive (38), (58) uni (67), umfassen, deren Abmessungen dem Querschnitt des anzuschließenden Rohres (4) angepaßt sind, um deren seitliche Aufsetzung auf dieses letzte zu ermöglichen, falls der Umkreiswulst (20) vor Montage des männlichen Teils (5) dieses Anschlußsystems (1) gebildet wird.

10. Anschlußsystem nach Anspruch 9, dadurch gekennzeichnet, daß die Muffe (59) Mittel (68) zum Drehen um den Sprengring (49) und zum Vermeiden, daß der männliche Teil (5) vom anzuschließenden Rohr herabschiebt, dadurch, daß die Winkelposition der Öffnungen (58, 67), respektive, der Muffe (59) und des Sprengrings (49) verstellt wird umfaßt, wobei diese Mittel (68) aus, einerseits, im Außenumkreis des Sprengringes (49) vorgesehenen halbkreisförmigen Nuten (69) und, andererseits, an der Innenwand der Muffe (59) vorgesehenen Beulen (70), die in der Lage sind, in den genannten halbkreisförmigen Nuten (69) zu gleiten, bestehen, wobei diese letzten an deren Enden an Hohlräume (71, 72) anschließen, in die die Beulen (70) am Ende der Drehung der Muffe (59) um den Sprengring (49) hineinführen und in die Hohlräume (72), in denen die Beulen (70) nach Winkelverstellung der Öffnungen (58, 67) aufgenommen sind, außerdem eine am Außenumkreis des Sprengringes (49) gemäß Zeugenden vorgesehene Nute (73) endet, sodaß die Axialbewegung des Riegels (48) und die Einführung der Innenbüchse (61) in das Loch (6) ermöglicht wird.

11. Anschlußsystem nach Anspruch 5, dadurch gekennzeichnet, daß der Riegel (148) von einer Büchse (161), die in der Lage ist, in der Zentralbohrung (150) des Sprengringes (149) zu gleiten und einen dem Querschnitt des anzuschließenden Rohres (4) angepaßten Innendurchmesser (163) aufweist, gebildet ist, wobei die genannte Muffe (161) außerdem, einerseits, eine fest mit deren oberen Ende (165) verbundene Seitenplatte (164), die dazu bestimmt ist, in verriegelter Stellung mit der oberen Fläche (166) des Sprengrings (149) zusammenzuarbeiten, um die Hineinführung der genannten Büchse (161) in das Loch (6) zu beschränken, und, andererseits, am Außenumkreis (171) vorgesehene Nuten (170), in denen in der Zentralbohrung (150) des Sprengringes (149) angeordnete Sperrstiften (169) gleiten, zum Vermeiden, daß der genannte Riegel (148) von diesen letzten getrennt wird, umfaßt.

12. Anschlußsystem nach Anspruch 6, dadurch gekennzeichnet, daß der Sprengring (49, 149) Mittel (173) zum Verursachen der Anziehung der Träger (32) an den Außenumkreis des anzuschließenden Rohres (4) heran und zum Sichern des Rückzugs, zufolge einer auf den Sperrmitteln (46) ausgeübten Zugkraft, der einklinkbaren Sperrmittel (29) aus dem Loch (6) umfaßt, wobei diese Mittel (173) aus einem kegelstumpfartigen Abschnitt (174) bestehen, der den im genannten Sprengring (49, 149) vorgesehenen Rücksprung (51, 151) mit den Verengungen (52, 152) verbindet und an dem entlang die freien Enden (53) der Laschen (45) zufolge einer Zugkraft auf den genannten Sprengring (49, 149) gleiten und zur Axialverstellung der Träger (32) führen.

13. Anschlußsystem nach Anspruch 1, dadurch gekennzeichnet, daß es Mittel (175) zum Feststellen der Winkelstellung des anzuschließenden Rohres (4) im Loch 6 umfaßt, die, einerseits, aus am freien Ende (3) des genannten anzuschließenden Rohres (4), oberhalb der Abdichtungsmittel (23) vorgesehenen Beulen oder Rippen (176) und, andererseits, in der am Boden (9) des Lochs (6) befindlichen zylindrischen Bohrung (10) vorgesehenen Nuten bestehen,

## Claims

1. Coupling device for a flexible hose or a rigid pipe, viz. for a high-pressure hydraulic circuit, comprising, on the one hand, a female portion (2) into which is engaged the free end (3) of a pipe to be coupled (4), this female portion (2) being formed of a hole (6) which, starting from the bottom (9), is comprised of a cylindrical bore (10) with a diameter (11) at least equal to the outer diameter (12) of the pipe to be coupled (4), a recess (13), a narrowing (16) defining, with this latter, a shoulder (17) and means ensuring the tightness of the coupling device and, on the other hand, snap-in locking means (29) forming withdrawable steps (30) interposing themselves between the shoulder (17) made in the hole (6) and the rear face (31) of a peripheral rim (20) the pipe to be coupled (4) is fitted with, in order to prevent this latter from disengaging from said female portion (2), in which coupling device the snap-in locking means (29) or withdrawable steps (30) are formed of at least two beams (32) with a "U"-shaped cross-section and comprise a core (41) capable of resting against the truncatedly shaped wall (42) of the recess (13), these beams (32) being evenly distributed around the pipe to be coupled (4) and co-operating, at their upper (33) and lower end (34), with the shoulder (17) of the hole (6) and the rear face (31) of the peripheral rim (20), respectively, the upper ends (33) of said beams (32) being furthermore extended by gripping means (44) capable of co-operating with locking means (46) capable of impeding the beams (32) from radially moving in the hole (6) and passing beyond the narrowing (16).

2. Coupling device according to claim 1, characterized in that the snap-in locking means (29) are achieved by cutting-out and deep-drawing a metallic flat, so as to confer to the beams (32) their "U"-shaped section, these beams (32) being connected, at their upper (33) and/or lower end (34), by connecting means (35) of a springy nature comprised of one or several annular blades (36) comprised of one or several serpents (43) connecting the parallel wings (39, 40) of said beams (32) at the level of the lower (34) and/or upper end (33) of these latter.

3. Coupling device according to claims 1 and 2, characterized in that the gripping means (44) are formed of tongues (45) the upper end (33) of the beams (32) is equipped with and corresponding to the extension of the core (41) of these latter. these tongues (45) being folded back over said beams (32), on the one hand, to cover the upper edges of their parallel wings (39, 40) and, on the other hand, to project over the shoulder (17) formed by the narrowing (16), so as to emerge from the hole (6) through the opening (15).

4. Coupling device according to claims 1 and 2, characterized in that the core (41) of the beams (32) is extended at the lower end (34) of the latter and folded back over the lower edge of the parallel wings (39, 40) to form a larger bearing face co-operating with the peripheral rim (20) of the pipe to be coupled (4).

5. Coupling device according to claim 1, characterized in that the locking means (46) are comprised, on the one hand, of a retaining ring (49, 149) ensuring the connection to the gripping means (44) co-operating with the snap-in locking means (29) and, on the other hand, of a lock (48, 148) acting onto these latter, so as to immobilize them in the hole (6).

6. Coupling device according to claim 5, characterized in that the retaining ring (49, 149) includes a central bore (50, 150), the axis of which coincides with that of the pipe to be coupled (4), in which is machined a set-back (51, 151) coming out of said retaining ring (49, 149), in the direction of the hole (6), through a narrowing (52, 152), into this set-back (51, 151) being inserted the free ends (53) of the tongues (45) forming the gripping means (44), these free ends (53) being folded back, so as to radially stand apart from the axis of the pipe to be coupled (4) and to be inscribed in a circle (54) with a larger diameter than the narrowing (52, 152) or to engage into cavities (55, 155) provided for in the walls of the set-back (51, 151).

7. Coupling device according to claim 5, characterized in that the lock (48) is in the form of a sleeve (59) fitting over the retaining ring (49) and including an inner bushing (61) with an outer diameter (62) slightly smaller than the diameter of the central bore (50) of said retaining ring (49) and an inner diameter (63) adjusted to the section of the pipe to be coupled (4), said inner bushing (61) being, furthermore, protruding with respect to the end (66) oriented towards the female portion (5) of the sleeve (59), so that it be capable of engaging into the hole (6) by interposing itself between the wall of said pipe to be coupled (4) and the beams (32) and impeding same from passing beyond the narrowing (16).

8. Coupling device according to claim 7, characterized in that the sleeve (59) has, in its wall, an opening (75) which serves to receive, in locked position, a locking pawl (76) integral with the outer wall of the retaining ring (49).

9. Coupling device according to claims 2 and 5, characterized in that the annular blade or blades (36), which connect the beams (32), the retaining ring (49) and the lock (48) include a side opening, (38), (58) and (67) respectively, the size of which is adjusted to the section of the pipe to be coupled (4), in order to enable their side fitment onto this latter in the event the peripheral rim (20) is formed before mounting the male portion (5) of said coupling device (1).

10. Coupling device according to claim 9, characterized in that the sleeve (59) comprises means (68) for pivoting on the retaining ring (49) and to impede the male portion (5) from sidely disengaging from the pipe to be coupled (4) by angularly offsetting the openings (58, 67) of the sleeve (59) and the retaining ring (49), respectively, these means (68) being comprised, on the one hand, of semicircular grooves (69) made on the outer periphery of the retaining ring (49) and, on the other hand, embosses (70) present on the inner wall of the sleeve (59) and capable of sliding in said semi-circular grooves (69), these latter joining, at the level of their ends, cavities (71, 72) into which engage the embosses (70) at the end of the rotation of the sleeve (59) about the retaining ring (49), into the cavities (72), occupied by the embosses (70) upon angularly offsetting the openings (58, 67), ending, furthermore, a groove (73) made according to generatrices on the outer periphery of the retaining ring (49), in order to allow the axial movement of the lock (48) and the engagement of the inner bushing (61) into the hole (6).

11. Coupling device according to claim 5, characterized in that lock (148) is formed by a bushing (161) capable of sliding in the central bore (150) of the retaining ring (149) and comprising an inner diameter (163) adjusted to the cross-section of the pipe to be coupled (4), said bushing (161) furthermore comprising, of the one hand, a side plate (164) integral with its upper end (165) and intended for co-operating, in locking position, with the upper face (166) of the retaining ring (149) to limit the engagement of said bushing (161) into the hole (6) and, on the other hand, grooves (170), provided for on its outer periphery (171), in which slide locking pawls (169) arranged in the central bore (150) of the retaining ring (149), in order to impede said lock (148) from dissociating from this latter.

12. Coupling device according to claim 6, characterized in that the retaining ring (49, 149) includes means (173) for causing the clamping of the beams (32) on the outer periphery of the pipe to be coupled (4) and ensure the withdrawal of the snap-in locking means (29) from the hole (6) upon a traction on the locking means (46), these means (173) being comprised of a truncated portion (174) connecting the set-back (51, 151) present in the retaining ring (49, 149) to the narrowing (52, 152) and alongside which are brought to slide, by a traction on said retaining ring (49, 149), the free ends (53) of the tongues (45), thereby causing the radial movement of the beams (32).

13. Coupling device according to claim 1, characterized in that it comprises means (175) for detecting the angular position of the pipe to be coupled (4) in the hole (6), comprised, on the one hand, of embosses or ribs (176) provided at the free end (3) of said pipe to be coupled (4), beyond the tightening means 23, and, on the other hand, slots (177) made in the cylindrical bore (10) located. at the bottom (9) of the hole (6).

**FIG. 2**

**FIG. 1**

**FIG. 3**

**FIG. 4**

FIG. 5

FIG. 6

FIG. 7

FIG. 9

FIG. 8